# EUROPÄISCHE PATENTANMELDUNG

(11) **EP 1 021 946 A2**
(43) Veröffentlichungstag der Anmeldung: **26.07.2000**
(21) Anmeldenummer: 00100874.7
(22) Anmeldetag: 18.01.2000
(51) Int. Cl.: A01H 5/10, E02D 17/20

(54) **Saatmischung zur Rekultivierung von Problemflächen**

(30) Priorität: 19.01.1999 DE 19901824
(71) Anmelder: Jochimsen, Maren, Prof. Dr., c/o Universität Essen, Fachbereich 9 (Biologie) Pflanzensoziologie und Ökologie, 45117 Essen (DE)
(72) Erfinder: Jochimsen, Maren, Prof. Dr., c/o Universität Essen, Fachbereich 9 (Biologie) Pflanzensoziologie und Ökologie, 45117 Essen (DE)
(74) Vertreter: Meyers, Hans-Wilhelm, Dr.Dipl.-Chem.

(57) **Zusammenfassung**

Gegenstand der vorliegenden Erfindung ist eine Saatmischung von Ruderalpflanzen zur Rekultivierung von Problemflächen, insbesondere Bergehalden.

## Beschreibung

Gegenstand der vorliegenden Erfindung ist eine Saatmischung zur Rekultivierung von Problemflächen, insbesondere Bergehalden, ein Verfahren zur Rekultivierung von Problemflächen sowie eine Pflanzengemeinschaft, die erhältlich ist durch Keimung und Aufwuchs der erfindungsgemäßen Saatmischung.

Die Begrünung von Problemflächen, gleich welcher Art (z.B. Abgrabungen und Deponien), ist gesetzlich vorgeschrieben (Eingriffsregelung nach § 8 Bundesnaturschutzgesetz) und wurde bzw. wird von Forstleuten oder Landschaftsgärtnern meist in Form einer Aufforstung oder von Rasenaussaaten durchgeführt. Diese Methoden erweisen sich dann als problematisch, wenn es sich um Abraum aus dem Berg- und Tagebau oder um sogenannte Altlasten handelt. Diese Substrate gelten nicht nur als pflanzenfeindlich, sondern als "biologisch tot", weil sie sich nur sehr schwer von selbst begrünen und die Rekultierungsversuche meistens, trotz beträchtlichen materiellen Einsatzes, beispielsweise Abdeckung mit Hilfe eines "kulturfähigen" Substrats bzw. Oberbodens etc., fehlschlagen. Neben dem ökonomischen Aspekt müssen aber auch die ökologischen Gesetzmäßigkeiten berücksichtigt werden.

Der derzeitige Stand der Technik ist in den "Empfehlungen zur Begrünung von Problemflächen" enthalten, die von der Forschungsgesellschaft Landschaftsentwicklung und Landschaftsbau e.V. (FFL), Bonn, im Januar 1998 herausgegeben wurden. In dieser Broschüre werden die während der letzten 30 Jahre gewonnenen Erkenntnisse und Erfahrungen zusammengefasst. Danach lautet die Definition für Problemflächen: "künstlich hergestellte oder veränderte Standorte, die sich nicht von selbst kurzfristig mit einer schützenden Vegetationsdecke versehen können". Das Zeitproblem resultiert in den meisten Fällen aus der den Substraten fehlenden Samenbank und dem ungenügenden und nicht standortgerechten Eintrag von Samen und Früchten aus der Umgebung, insbesondere wissenschaftlich nachgewiesen für Bergematerial und dekontaminierte Altlasten. Deshalb sind Ansaaten notwendig. Der zweite, von den Autoren genannte Gesichtspunkt ist die Schutzwirkung der Vegetation gegenüber der Erosion, d.h. den Boden bzw. die Landoberfläche zerstörenden Kräften. Weiter heißt es: "Die Auswahl der Pflanzen für die Begrünung erfolgt unter Berücksichtigung ihrer biotechnischen Eigenschaften und ihrer Standorteignung. Vorrangig sollten autochthone Pflanzen eingesetzt werden." Dem ingenieurbiologischen Ansatz, d.h. dem Lebendverbau, wird auch hier die größte Bedeutung zugemessen, wobei nicht hinreichend berücksichtigt wird, dass zwischen Standorteignung und Standortanspruch wesentliche Unterschiede bestehen können. Im ersten Fall entscheidet der Anwender über die Eignung, die sich natürlich auch manipulieren lässt, während der Ökologe sich an dem Verhalten der Pflanze vor Ort orientiert. Der Einsatz gebietseigener Arten scheint zwar wünschenswert, die Forderung ist aber unpräzise gefasst.

Bezüglich der Standortbedingungen herrscht die Meinung, dass das Begrünungsverfahren umso aufwendiger ist je extremer der Standort sei, also einen hohen Einsatz an materiellen Mitteln bedeutet. Für die erdgebundenen Flächen werden die einzelnen Anwendungsbereiche (erosions-, rutsch- und windgefährdete Böden sowie Rohböden und Erdbauwerke aus Haldenmaterial) aufgeführt, wobei vor allem auf die Tiefenwirkung von Bauweisen zur Stabilisierung der Substrate hingewiesen wird.

Derzeit übliche Begrünungen werden mit Hilfe einiger weniger Standardrasenmischungen durchgeführt. Die "Empfehlungen" weisen auf die "Regel-Saatgut-Mischungen Rasen RSM" hin. Auch die Firma Conrad Appel Darmstadt, vertreibt Saatgutmischungen, bei denen einer "Gras-Grundmischung" von 20 g eine "Wildpflanzen-Samenmischung" von 5 g zugesetzt ist. Die für Problemflächen am ehesten in Frage kommende "Appel-WPS®-Mischung für Bunte Brache" enthält zwar 8 Arten, die als Wildkräuter bzw. Ruderalpflanzen anzusehen sind, darüber hinaus aber auch standortmäßig ungeeignete Ackerwildkräuter und eben Gräser, was aus vielerlei Gründen problematisch ist.

Gräser haben im allgemeinen einen hohen Wasserbedarf und entwickeln darüber hinaus einen dichten Wurzelfilz, welcher den Niederschlag kaum in den Boden eindringen lässt, so dass der Regen vor allem im geneigten Gelände oberflächlich abfließt. Die geringe Trockenresistenz der meisten Gräser bedeutet, dass sie schnell welken und somit auch eine Brandgefahr darstellen.

Das der Erfindung zugrundeliegende Problem bestand mithin darin, eine Saatmischung anzugeben, die es erlaubt, in sicherer Weise eine nachhaltige Begrünung von Problemflächen, insbesondere Bergehalden zu gewährleisten.

Gelöst wird diese Aufgabe durch eine Saatmischung mit den Merkmalen des Patentanspruchs 1.

Die Patentansprüche 2 bis 6 betreffen bevorzugte Ausführungsformen der erfindungsgemäßen Saatmischung.

Der unabhängige Patentanspruch 7 betrifft ein Verfahren zur Rekultivierung von Problemflächen sowie der unabhängige Anspruch 9 die Pflanzengemeinschaft, die erhältlich ist durch Keimung und Aufwuchs der erfindungsgemäßen Saatmischung.

Die Saatmischung zur Rekultivierung von Problemflächen, insbesondere Bergehalden, umfasst eine Mischung der Samen folgender Ruderalpflanzen:

Achillea spec., Arrhenatherum spec., Artemisia spec., Centaurea spec., Cirsium spec., Daucus spec., Echium spec., Galium spec., Hypericum spec., Isatis spec., Linaria spec., Lotus spec., Medicago spec., Oenothera spec., Pastinaca spec., Pimpinella spec., Plantago spec., Poa spec., Reseda spec., Silene spec., Tanacetum spec., Taraxacum spec., Verbascum spec.

Durch diese Saatmischung wird nach Keimung und Aufwuchs eine Pflanzengemeinschaft zur Verfügung gestellt, die überraschenderweise eine Begrünung von Problemflächen ermöglicht. Die Saatmischung trägt dem natürlichen ökologischen Potential dieser extremen Standorte Rechnung und leitet eine autogene Entwicklung der Vegetation nach dem Muster der natürlichen Sukzession ein. In vorteilhafter Weise wird durch die Ansaat der Arten der erfindungsgemäßen Mischung eine Abstimmung von Kräutern mit Pioniereigenschaften und weiterer in großer Anzahl beteiligter Arten zur Verfügung gestellt, die insgesamt eine sich auf wechselnde Umweltverhältnisse flexibel einstellen könnende Pflanzengemeinschaft gewährleistet, d.h. die Pflanzengemeinschaft kann sich den herrschenden Umweltbedingungen anpassen. Dies entspricht einem wesentlichen Gesichtspunkt im Zusammenhang mit der Forderung nach Nachhaltigkeit der Begrünung. Durch die Aussaat der erfindungsgemäßen Samenmischung werden die ersten Entwicklungsstadien, die, äußerst günstige Verhältnisse, was das natürliche Samenangebot in der unmittelbaren Umgebung betrifft, vorausgesetzt, 10 bis 12 Jahre beanspruchen würden, in vorteilhafter Weise so stark verkürzt, dass bereits nach 3 Jahren eine Biozönose entstehen kann, die aus der Sicht des Naturschutzes Ausgleichswert besitzt.

Die Ansaat von Ruderalpflanzen im Vergleich zu den üblichen Rasenmischungen hat den Vorteil, dass in der Samenmischung berücksichtigte Arten wie Artemisia mit einem mehr als 1 m Tiefe erreichenden Wurzelsystem erosions-, rutsch- und windgefährdete Böden befestigt werden können. Aufgrund der erfindungsgemäßen Artenmischung mit ihren zahlreichen, unterschiedlich ausgebildeten Wurzelsystemen wird die Stabilisierung der Böden der Problemflächen ohne weiteren Aufwand erreicht. Dieses gilt gleichermaßen für Rohböden von denen behauptet wird, dass die Ansiedlung höherer Pflanzen wie Gräser, Kräuter usw. erst nach einer grundlegenden Melioration des Substrates möglich sei, was ebenso wenig zutrifft wie die für notwendig erklärte Aufbringung einer Deckschicht (top soil) im Falle von Haldenmaterialien. Beides kann bei einer Begrünung mit der erfindungsgemäßen Saatmischung entfallen, da durch Ausbringung der erfindungsgemäßen Saatmischung eine natürliche Sukzession quasi eingeleitet wird.

Vorzugsweise wird eine Saatmischung enthaltend Samen von folgenden Ruderalpflanzen eingesetzt:

Achillea millefolium, Arrhenatherum elatius, Artemisia vulgaris, Centaurea scabiosa, Cirsium arvense, Daucus carota, Echium vulgare, Galium album, Hypericum perforatum, Isatis tinctoria, Linaria vulgaris, Lotus corniculatus, Medicago lupulina, Oenothera biennis, Pastinaca sativa, Pimpinella saxifraga, Plantago lanceolata, Poa compressa, Reseda lutea, Silene vulgaris, Tanacetum vulgare, Taraxacum officinale, Verbascum densiflorum, Verbascum nigrum.

Zur Steigerung des erfindungsgemäßen Effektes können die Saatmischungen des weiteren mindestens eine der nachfolgend genannten Spezies oder Arten umfassen:

Anchusa spec., insbesondere Anchusa officinalis, Arctium spec., insbesondere Arctium lappa, Bromus spec., insbesondere Bromus erectus und/oder Bromus sterilis, Capsella spec., insbesondere Capsella bursa-pastoris, Chenopodium spec., insbesondere Chenopodium album, Cichorium spec., insbesondere Cichorium intybus, Cynoglossum spec., insbesondere Cynoglossum officinale, Galium spec., insbesondere Galium aparine, Geranium spec., insbesondere Geranium pusillum, Malva spec., insbesondere Malva sylvestris, Melandrium spec., insbesondere Melandrium album, Melilotus spec., insbesondere Melilotus alba und/oder Melilotus officinalis, Papaver spec., insbesondere Papaver rhoeas, Poa spec., insbesondere Poa trivialis, Reseda spec., insbesondere Reseda luteola, Rumex spec., insbesondere Rumex crispus, Sanguisorba spec., insbesondere Sanguisorba minor, Saponaria spec., insbesondere Saponaria officinalis, Sisymbrium spec., insbesondere Sisymbrium officinale, Trifolium spec., insbesondere Trifolium repens, Verbena spec., insbesondere Verbena officinalis, Vicia spec., insbesondere Vicia hirsuta.

Vorzugsweise wird die erfindungsgemäße Saatmischung in folgenden Mischungsverhältnissen zusammengestellt:

| **Saatmischung** | **Gewichtsteile** |
|---|---|
| Achillea spec. | 6 bis 7 |
| Arrhenatherum spec. | 8 bis 9 |
| Artemisia spec. | 6 bis 7 |
| Centaurea spec. | 10 bis 11 |
| Cirsium spec. | 8 bis 9 |
| Daucus spec. | 13 bis 14 |
| Echium spec. | 12 bis 13 |
| Galium spec. | 5 bis 6 |
| Hypericum spec. | 8 bis 9 |
| Isatis spec. | 10 bis 11 |
| Linaria spec. | 4 bis 5 |
| Lotus spec. | 5 bis 6 |
| Medicago spec. | 8 bis 9 |
| Oenothera spec. | 4 bis 5 |
| Pastinaca spec. | 20 bis 21 |
| Pimpinella spec. | 1 bis 2 |
| Plantago spec. | 8 bis 9 |
| Poa spec. | 2 bis 3 |
| Reseda spec. | 5 bis 6 |
| Silene spec. | 2 bis 3 |
| Tanacetum spec. | 4 bis 5 |
| Taraxacum spec. | 4 bis 5 |
| Verbascum spec. | 1 bis 5 |

Insbesondere werden die nachstehend genannten Spezies in den angegebenen Mengen in Gewichtsteilen zusammengestellt:

| **Saatmischung** | **Gewichtsteile** |
|---|---|
| Achillea millefolium | 6 bis 7 |
| Arrhenatherum elatius | 8 bis 9 |
| Artemisia vulgaris | 6 bis 7 |
| Centaurea scabiosa | 10 bis 11 |
| Cirsium arvense | 8 bis 9 |
| Daucus carota | 13 bis 14 |
| Echium vulgare | 12 bis 13 |
| Galium album | 5 bis 6 |
| Hypericum perforatum | 8 bis 9 |
| Isatis tinctoria | 10 bis 11 |
| Linaria vulgaris | 4 bis 5 |
| Lotus corniculatus. | 5 bis 6 |
| Medicago lupulina | 8 bis 9 |
| Oenothera biennis | 4 bis 5 |
| Pastinaca sativa | 20 bis 21 |
| Pimpinella saxifraga | 1 bis 2 |
| Plantago lancelata | 8 bis 9 |
| Poa compressa | 2 bis 3 |
| Reseda lutea | 5 bis 6 |
| Silene vulgaris | 2 bis 3 |
| Tanacetum vulgare | 4 bis 5 |
| Taraxacum officinale | 4 bis 5 |
| Verbascum densiflorum | 2 bis 3 |
| Verbascum nigrum | 1 bis 2 |

Insbesondere ist es vorteilhaft, Saatmischungen einzusetzen, in denen mindestens eine der nachstehend genannten Spezies oder Arten vorzugsweise in den nebenstehenden Mengenverhältnissen anwesend sind:

| **Saatmischung** | **Gewichtsteile** |
|---|---|
| Anchusa spec., insbesondere Anchuse officinalis | 4 bis 5 |
| Arctium spec., insbesondere Arctium lappa | 5 bis 6 |
| Bromus spec., insbesondere Bromus erectus und/oder Bromus sterilis | 18 bis 20 |
| Capsella spec., insbesondere Capsella bursapastoris | 2 bis 3 |
| Chenopodium spec., insbesondere Chenopodium album | 2 bis 3 |
| Cichorium spec., insbesondere Cichorium intybus | 8 bis 9 |
| Cynoglossum spec., insbesondere Cynoglossum officinale | 10 bis 11 |
| Galium spec., insbesondere Galium aparine | 2 bis 3 |
| Geranium spec., insbesondere Geranium pusillum | 2 bis 3 |
| Malva spec., insbesondere Malva sylvestris | 4 bis 5 |
| Melandrium spec., insbesondere Melandrium album | 5 bis 6 |
| Melilotus spec., insbesondere Melilotus alba und/oder Melilotus officinalis | 25 bis 30 |
| Papaver spec., insbesondere Papaver rhoeas | 1 bis 2 |
| Poa spec., insbesondere Poa trivialis | 1 bis 2 |
| Reseda spec., insbesondere Reseda luteola | 2 bis 3 |
| Rumex spec., insbesondere Rumex crispus | 8 bis 9 |
| Sanguisorba spec., insbesondere, Sanguisorba minor | 10 bis 11 |
| Saponaria spec., insbesondere Saponaria officinalis | 2 bis 3 |
| Sisymbrium spec., insbesondere Sisymbrium officinale | 1 bis 2 |
| Trifolium spec., insbesondere Trifolium repens | 2 bis 3 |
| Verbena spec., insbesondere Verbena officinalis | 1 bis 2 |
| Vicia spec., insbesondere Vicia hirsuta | 5 bis 6 |

Die erfindungsgemäße Saatmischung wird in vorteilhafter Weise in einem Verfahren zur Rekultivierung von Problemflächen eingesetzt, insbesondere bei der Begrünung von Bergehalden, bei denen diese Problemflächen als Substrat für den Pflanzenbewuchs dienen müssen. Die erfindungsgemäße Saatmischung wird auf die Problemfläche ausgebracht. Das Ausbringen erfolgt vorzugsweise nicht mit maschinellen Vorrichtungen, sondern per Hand. Vorzugsweise erfolgt die Aussaat im Spätherbst direkt in das zu begrünende Substrat. In Abhängigkeit von den ökologischen Erfordernissen werden 5 bis 10 g/m² der erfindungsgemäßen Saatmischung ausgebracht. Eine größere Menge ist dann zu empfehlen, wenn aufgrund bestehender Erosionsgefahr möglichst schnell eine weitgehend geschlossene Pflanzendecke erreicht werden soll oder wenn wegen grober Substratstruktur, z.B. bei Bergematerial, mit einem Verlust von Samen in den tieferen Klüften zu rechnen ist. Gegebenenfalls kann die auszusäende Menge auch weiter erhöht werden. Die Aussaat erfolgt vorteilhafterweise von Hand, da die unterschiedlichen Korngrößen der einzelnen Samen ein wiederholtes Durchmischen des Gemenges erfordern, wenn eine gleichmäßige Aussaat erzielt werden soll. Dies ist zu bevorzugen.

Anschließend können die Flächen mit 1 bis 5 l/m² Reinsand, je nach Substratbedingungen, wie oben beschrieben, abgedeckt werden, auch um ein Verwehen des Saatgutes zu verhindern.

Es kann sich empfehlen, dass der Zustand des Substrates festgestellt wird, um ungünstige Bedingungen durch Einstellung des pH-Wertes auf einen Bereich von pH 6 bis 8 und/oder Düngung mit Substanzen, die den vorhandenen Zustand der Problemfläche supplementieren, zwecks Optimierung der Ausgangsbedingungen und Etablieren einer nachhaltigen Pflanzengemeinschaft zu verbessern. So kann beispielsweise eine möglichst präzise physikalische und chemische Analyse des Substratzustandes, d.h. der Korngrößenzusammensetzung, des Nährstoffgehaltes sowie organischer und anorganischer Belastungen zunächst erstellt werden, um gegebenenfalls mittels Aufbringung von Substanzen gegenzusteuern. Im Hinblick auf derartige Belastungen kann auch die Aufklärung der Historie von Substrat bzw. in Frage stehendem Gelände (z.B. Industriebrachen) wichtige Hinweise liefern. Außerdem spielt das Relief bezüglich der Erosionsgefahr und des Wasserhaushalts (Regime der Niederschläge und Grundwasser) für die Beurteilung der aktuellen Situation eine möglicherweise nicht zu vernachlässigende Rolle. Aufgrund einer aufgenommenen ökologischen Analyse des Ist-Zustandes, die vor jedweder solide durchgeführten Rekultivierungsmaßnahme zu empfehlen ist, werden nach Lage der Dinge vom Fachmann gezielte Substratverbesserungen vorgenommen. Diese können bei Bedarf entweder die Speicherkapazität für Wasser erhöhen, wenn die mittlere Korngröße des Substrats einen bestimmten Wert beispielsweise ca. 2 mm übersteigt und/oder die Nährstoffsituation verbessern, wenn die Kationenaustauschkapazität aufgrund ungenügender Mengen von Tonmineralien und organischer Substanz - wie vor allem bei Technosolen gegeben - nicht zur Sicherung der pflanzlichen Ernährung ausreicht. In diesen Fällen (Grenzwert abhängig von Bodenart und pH-Wert) ist es zu empfehlen, Zuschlagsstoffe beizugeben. Bei frischem, grobschuttigen Bergematerial (pH ≅ 7,5) werden beispielsweise Reinsand, vorzugsweise in Mengen zwischen 3 und 7 l/m² und 80 bis 160, vorzugsweise ca. 120 g Speicherstoff (z.B. Agrosil) pro m² zugegeben, während beides bei mehr oder weniger erdigen Substraten aus der thermischen Reinigung (Pyrolyse) auch entfallen kann. Der notwendige Nährstoffgehalt, vor allem Stickstoff, Phosphor, Kalium und Magnesium sollte vorzugsweise durch geeignete Düngergaben eingestellt sein und ebenfalls sollte der pH-Wert gegebenenfalls durch geeignete, im Handel erhältliche Zuschlagsstoffe auf Werte zwischen 6 bis 8 eingestellt werden. Darüber hinaus kann bei bereits verdichteten Böden auch eine mechanische Auflockerung empfehlenswert sein.

Vorzugsweise erfolgt die Zusammenstellung des Saatgutes von Hand aufgrund der angegebenen Anteile der einzelnen Arten in Gewichtsteilen der für die Auswahl benötigten Gesamtmenge. Die ökologischen Gegebenheiten vor Ort können Abweichungen in der Zusammensetzung notwendig machen, die aber dem Fachmann bekannt sind und keiner näheren Erläuterungen bedürfen. Als Beispiel sei lediglich angeführt, dass bei Substraten, die relativ leicht trocken fallen, beispielsweise Gräser, aus der Saatmischung entfernt werden können, ohne den Erfolg der Begrünung wesentlich zu beeinflussen.

Die durch Keimung und Aufwuchs der erfindungsgemäßen Saatmischung entstehende Pflanzengemeinschaft ist ebenfalls Gegenstand der vorliegenden Erfindung.

Die Erfindung wird anhand des folgenden Ausführungsbeispiels näher erläutert:

### Beispiel

Im November 1986 wurde auf der Halde Waltrop, Kreis Recklinghausen, auf einer ca. 1 ha großen Fläche ein Langzeitversuch mit der erfindungsgemäßen Saatmischung zur Begrünung von Bergematerial angelegt. Der Versuch umfasste neben 2 unterschiedlichen Bergematerialien jeweils 7 verschiedene Substratbehandlungen - u.a. auch die Anwendung von top-soil und 3 Expositionen, die auf Bodenfeuchte und -temperatur sowie reliefbedingte Stabilität des Substrats Einfluss nehmen.

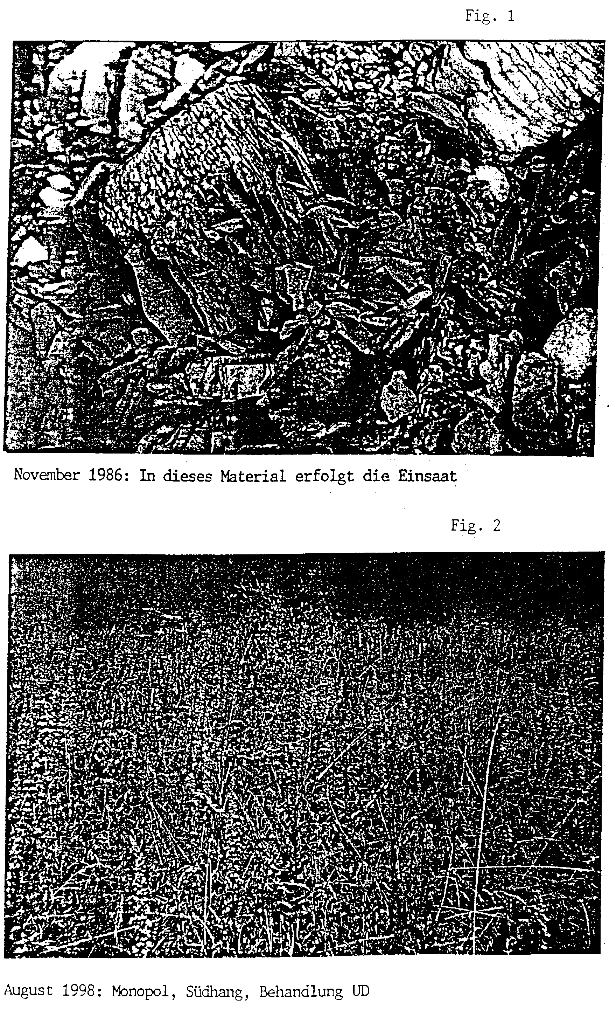

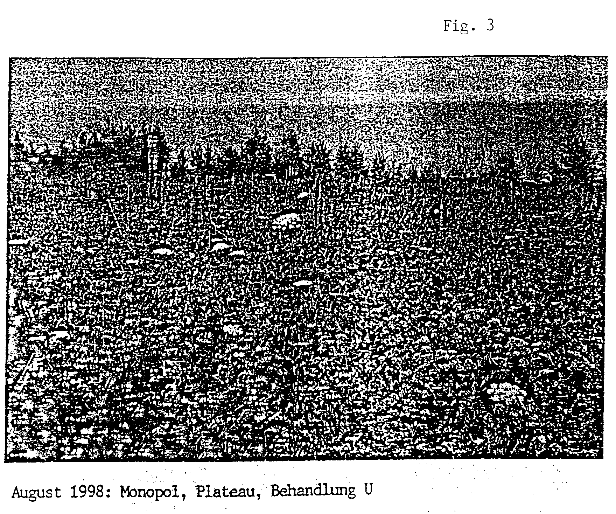

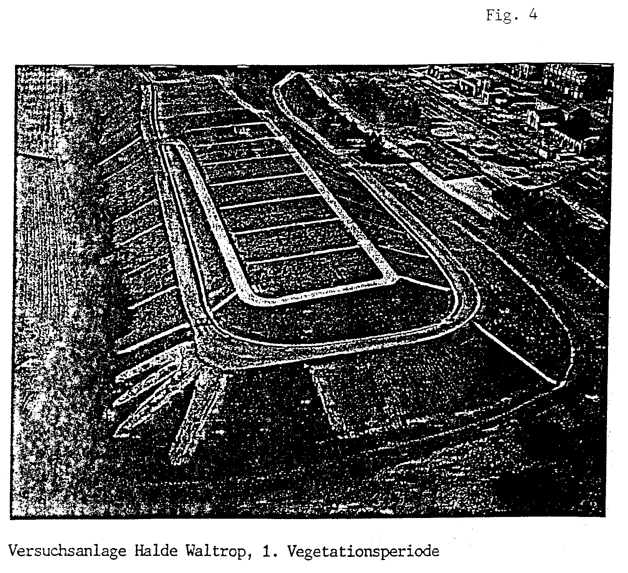

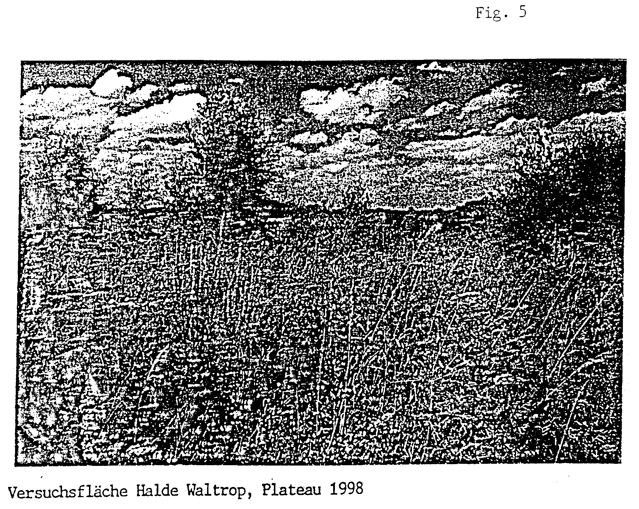

Die Aussaat der erfindungsgemäßen Saatmischung erfolgte im November direkt in das anstehende Substrat (s. Fig. 1 und 4).

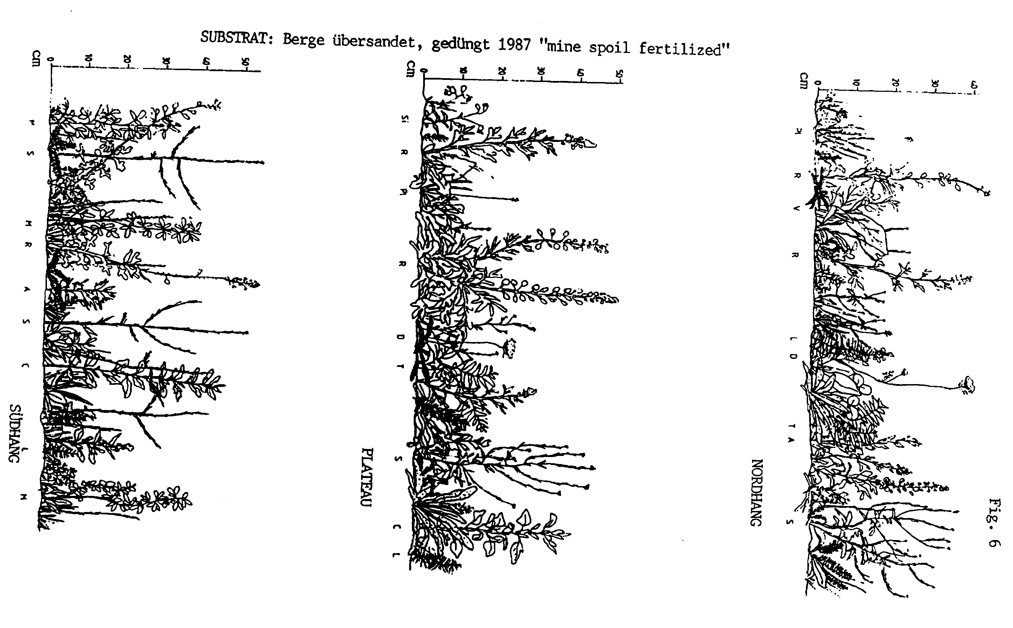

Die wissenschaftlichen Untersuchungen betrafen bzw. betreffen
1. die Entwicklung des Deckungsgrades,
2. die Entwicklung der Biomasseproduktion,
3. die Entwicklung der Artendiversität, wie sie sich sowohl durch die Einsaat - als auch Anflugarten darstellt und
4. die Entwicklung der Strukturvielfalt (s. Fig. 2, 3 - 6) als Ausdruck des ökologischen bzw. biozönotischen Wertes.

Bodenentwicklung und Fauna wurden von anderen Gruppen bearbeitet.

Die Ergebnisse zeigten, dass
- das Substrat nicht pflanzenfeindlich war, sondern Einsaaten notwendig waren, da die Kontrollflächen auch nach 12 Jahren noch weitgehend vegetationsfrei blieben.
- Düngung die anfängliche Vegetationsentwicklung zwar beschleunigte, aber nicht in allen Fällen zwingend notwendig war und nach längstens 5 Jahren beendet werden kann,
- weitere Pflegemaßnahmen entfallen können, da sich die Vegetation aus eigenen Kräften progressiv weiter entwickelte.
- sich die erfindungsgemäße Samenmischung sowohl aus pflanzensoziologischer als auch ökologischer Sicht bewährte, da sie nicht nur witterungsbedingte Schwankungen in der Produktivität einzelner Arten auffing, sondern auch das Potential für eine progressive Vegetationsentwicklung nach dem Muster der natürlichen Sukzession enthielt.
- aus der Sicht des Naturschutzes bereits nach wenigen Jahren ein wertvoller Ausgleichsbiotop entstanden war, der die Berghalde Waltrop, an ökologischen Parametern gemessen, voll in die Landschaft integrierte.

## Patentansprüche

1. Saatmischung zur Rekultivierung von Problemflächen, insbesondere Bergehalden, wobei die Saatmischung Samen von Ruderalpflanzen der folgenden Arten enthält: Achillea spec., Arrhenatherum spec., Artemisia spec., Centaurcea spec., Cirsium spec., Daucus spec., Echium spec., Galium spec., Hypericum spec., Isatis spec., Linaria spec., Lotus spec., Medicago spec., Oenothera spec., Pastinaca spec., Pimpinella spec., Plantago spec., Poa spec., Reseda spec., Silene spec., Tanacetum spec., Taraxacum spec., Verbascum spec.

2. Saatmischung nach Anspruch 1, wobei die Saatmischung Samen von Ruderalpflanzen der folgenden Spezies enthält: Achillea millefolium, Arrhenatherum elatius, Artemisia vulgaris, Centaurea scabiosa, Cirsium arvense, Daucus carota, Echium vulgare, Galium album, Hypericum perforatum, Isatis tinctoria, Linaria vulgaris, Lotus corniculatus, Medicago lupulina, Oenothera biennis, Pastinaca sativa, Pimpinella saxifrage, Plantago lanceolata, Poa compressa, Reseda lutea, Silene vulgaris, Tanacetum vulgare, Taraxacum officinale, Verbascum densiflorum, Verbascum nigrum.

3. Saatmischung nach Anspruch 1 oder 2, enthaltend weiterhin Samen von mindestens einer der nachfolgend genannten folgenden Spezies oder Arten:
Anchusa spec., insbesondere Anchusa officinalis, Arctium spec., insbesondere Arctium lappa, Bromus spec., insbesondere Bromus erectus und/oder Bromus sterilis, Capsella spec., insbesondere Capsella bursapastoris, Chenopodium spec., insbesondere Chenopodium album, Cichorium spec., insbesondere Cichorium intybus, Cynoglossum spec., insbesondere Cynoglossum officinale, Galium spec., insbesondere Galium aparine, Geranium spec., insbesondere Geranium pusillum, Malva spec., insbesondere Malva sylvestris, Melandrium spec., insbesondere Melandrium album, Melilotus spec., insbesondere Melilotus alba und/oder Melilotus officinalis, Papaver spec., insbesondere Papaver rhoeas, Poa spec., insbesondere Poa trivialis, Reseda spec., insbesondere Reseda luteola, Rumex spec., insbesondere Rumex crispus, Sanguisorba spec., insbesondere Sanguisorba minor, Saponaria spec., insbesondere Saponaria officinalis, Sisymbrium spec., insbesondere Sisymbrium officinale, Trifolium spec., insbesondere Trifolium repens, Verbena spec., insbesondere Verbena officinalis, Vicia spec., insbesondere Vicia hirsuta.

4. Saatmischung nach Anspruch 1, wobei die Saatmischung Samen von Ruderalpflanzen der folgenden Arten mit den angegebenen Mengen in Gewichtsteilen enthält:
| **Saatmischung** | **Gewichtsteile** |
|---|---|
| Achillea spec. | 6 bis 7 |
| Arrhenatherum spec. | 8 bis 9 |
| Artemisia spec. | 6 bis 7 |
| Centaurea spec. | 10 bis 11 |
| Cirsium spec. | 8 bis 9 |
| Daucus spec. | 13 bis 14 |
| Echium spec. | 12 bis 13 |
| Galium spec. | 5 bis 6 |
| Hypericum spec. | 8 bis 9 |
| Isatis spec. | 10 bis 11 |
| Linaria spec. | 4 bis 5 |
| Lotus spec. | 5 bis 6 |
| Medicago spec. | 8 bis 9 |
| Oenothera spec. | 4 bis 5 |
| Pastinaca spec. | 20 bis 21 |
| Pimpinella spec. | 1 bis 2 |
| Plantago spec. | 8 bis 9 |
| Poa spec. | 2 bis 3 |
| Reseda spec. | 5 bis 6 |
| Silene spec. | 2 bis 3 |
| Tanacetum spec. | 4 bis 5 |
| Taraxacum spec. | 4 bis 5 |
| Verbascum spec. | 1 bis 5 |

5. Saatmischung nach Anspruch 1, wobei die Saatmischung Samen von Ruderalpflanzen der folgenden Arten in den angegebenen Mengen in Gewichtsteilen enthält:
| **Saatmischung** | **Gewichtsteile** |
|---|---|
| Achillea millefolium | 6 bis 7 |
| Arrhenatherum elatius | 8 bis 9 |
| Artemisia vulgaris | 6 bis 7 |
| Centaurea scabiosa | 10 bis 11 |
| Cirsium arvense | 8 bis 9 |
| Daucus carota | 13 bis 14 |
| Echium vulgare | 12 bis 13 |
| Galium album | 5 bis 6 |
| Hypericum perforatum | 8 bis 9 |
| Isatis tinctoria | 10 bis 11 |
| Linaria vulgaris | 4 bis 5 |
| Lotus corniculatus. | 5 bis 6 |
| Medicago lupulina | 8 bis 9 |
| Oenothera biennis | 4 bis 5 |
| Pastinaca sativa | 20 bis 21 |
| Pimpinella saxifraga | 1 bis 2 |
| Plantago lanceolata | 8 bis 9 |
| Poa compressa | 2 bis 3 |
| Reseda lutea | 5 bis 6 |
| Silene vulgaris | 2 bis 3 |
| Tanacetum vulgare | 4 bis 5 |
| Taraxacum officinale | 4 bis 5 |
| Verbascum densiflorum | 2 bis 3 |
| Verbascum nigrum | 1 bis 2 |

6. Saatmischung nach Anspruch 3, enthaltend weiterhin Samen von mindestens einer der nachfolgend genannten folgenden Spezies oder Arten in den angegebenen Mengen an Gewichtsteilen:
| **Saatmischung** | **Gewichtsteile** |
|---|---|
| Anchusa spec., insbesondere Anchusa officinalis | 4 bis 5 |
| Arctium spec., insbesondere Arctium lappa | 5 bis 6 |
| Bromus spec., insbesondere Bromus erectus und/oder Bromus sterilis | 18 bis 20 |
| Capsella spec., insbesondere Capsella bursapastoris | 2 bis 3 |
| Chenopodium spec., insbesondere Chenopodium album | 2 bis 3 |
| Cichorium spec., insbesondere Cichorium intybus | 8 bis 9 |
| Cynoglossum spec., insbesondere Cynoglossum officinale | 10 bis 11 |
| Galium spec., insbesondere Galium aparine | 2 bis 3 |
| Geranium spec., insbesondere Geranium pusillum | 2 bis 3 |
| Malva spec., insbesondere Malva sylvestris | 4 bis 5 |
| Melandrium spec., insbesondere Melandrium album | 5 bis 6 |
| Melilotus spec., insbesondere Melilotus alba und/oder Melilotus officinalis | 25 bis 30 |
| Papaver spec., insbesondere Papaver rhoeas | 1 bis 2 |
| Poa spec., insbesondere Poa trivialis | 1 bis 2 |
| Reseda spec., insbesondere Reseda luteola | 2 bis 3 |
| Rumex spec., insbesondere Rumex crispus | 8 bis 9 |
| Sanguisorba spec., insbesondere, Sanguisorba minor | 10 bis 11 |
| Saponaria spec., insbesondere Saponaria officinalis | 2 bis 3 |
| Sisymbrium spec., Insbesondere Sisymbrium officinale | 1 bis 2 |
| Trifolium spec., insbesondere Trifolium repens | 2 bis 3 |
| Verbena spec., insbesondere Verbena officinalis | 1 bis 2 |
| Vicia spec., insbesondere Vicia hirsuta | 5 bis 6 |

7. Verfahren zur Rekultivierung von Problemflächen, insbesondere Bergehalden, als Substrat für Pflanzenbewuchs, wobei eine Saatmischung gemäß mindestens einem der Ansprüche 1 bis 6 auf die Problemfläche ausgebracht wird.

8. Verfahren gemäß Anspruch 7, wobei nach Feststellung des Zustands des Substrats dieses durch Einstellung des pH-Wertes auf einen Bereich von pH 6 bis 8 und/oder Düngung mit Substanzen, die den vorhandenen Zustand der Problemfläche supplementieren, zwecks Optimierung von Keimung und Aufwuchs und Etablieren einer nachhaltigen Pflanzengemeinschaft optimiert wird.

9. Pflanzengemeinschaft erhältlich durch Keimung und Aufwuchs der Saatmischung nach einem der Ansprüche 1 bis 6.
